(19) Europäisches Patentamt
European Patent Office
Office européen des brevets

(11) **EP 3 666 722 B1**

(12) **EUROPEAN PATENT SPECIFICATION**

(45) Date of publication and mention
of the grant of the patent:
**24.02.2021 Bulletin 2021/08**

(51) Int Cl.:
***B66F 9/22*** *(2006.01)*     ***G01G 19/08*** *(2006.01)*

(21) Application number: **18212407.3**

(22) Date of filing: **13.12.2018**

(54) **A METHOD FOR DETERMINING THE WEIGHT OF A LOAD THAT IS LIFTED BY A LIFT-TRUCK**

VERFAHREN ZUM BESTIMMEN DES GEWICHTS EINER VON EINEM HUBWAGEN ANGEHOBENEN LAST

PROCÉDÉ PERMETTANT DE DÉTERMINER LE POIDS D'UNE CHARGE SOULEVÉE PAR UN CHARIOT ÉLÉVATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.06.2020 Bulletin 2020/25**

(73) Proprietor: **Toyota Material Handling Manufacturing Sweden AB
595 81 Mjölby (SE)**

(72) Inventor: **Khudair, Haider
602 34 Norrköping (SE)**

(74) Representative: **Ström & Gulliksson AB
Box 5275
102 46 Stockholm (SE)**

(56) References cited:
**EP-A2- 1 953 114         WO-A1-92/03710
WO-A1-2017/202434**

## Description

### Technical field

The present disclosure relates to a lift-truck with a controller that is configured to determine the weight of a load that is lifted by the lift-truck. The present disclosure also relates to a method for determining the weight of a load that is lifted by the lift-truck.

### Background art

Lift-trucks are commonly used to transport goods in warehouses. In certain operating situations it is important to determine the weight of the load that the lift-truck is carrying on its load holder, e.g. lifting forks. For example in order to limit the maximum driving velocity of the lift-truck, or the maximum lifting height in dependency of the weight of the load that the lift truck is carrying.

Document WO2017202434 A1 discloses an example of a lift-truck according to the preamble of claim 1.

Today, the weight of a load on the load holder of the lift truck may be determined from the pressure, measured by a pressure sensor, in the hydraulic system of the lift-truck. During movement of the load, the pressure in the hydraulic system is dynamic. However, dynamic pressure is typically not suitable for weight determination since it varies over time and therefore may result in faulty results of the weight determination. To ensure true weight determination it is therefore important that static pressure conditions prevail in the hydraulic system during measurement of the pressure for weight determination. To achieve static pressure in hydraulic system, the load holder is stopped and a lowering valve in the hydraulic system is operated to drain some fluid from the hydraulic system. However, the lowering valve is sensitive and it can therefore not always be ensured that sufficient fluid is drained to achieve completely static pressure in the hydraulic system. The conventional method may therefore result in an inaccurate determination of weight of the load on the load holders. The conventional method is also time consuming due to operation of the lowering valve.

Consequently, it is an object of the present disclosure to provide a lift-truck which solves at least one of the problems of the prior-art. More specific, it is an object of the present disclosure to provide a lift-truck in which the weight of a load on the load holder may be determined with high accuracy. A further object of the present disclosure is to provide a lift-truck in which the weight of a load on the load holder may be determined in short time.

A further object of the present disclosure is to a achieve a method for determining the weight of a load with high accuracy during lifting of the load with a lift-truck.

### Summary of the invention

According to the present disclosure, at least one of the aforementioned objects are met by a lift-truck comprising a load holder arranged movable upwards/downwards in vertical direction and a hydraulic drive comprising at least one hydraulic cylinder arranged to move the load holder and a controller configured to control operation of the lift-truck characterized in that;

the controller is configured to perform a weight determination cycle including:

- determine the velocity (V) of the load holder during vertical movement of the load holder;
- determine the dynamic pressure ($P_{cdyn}$) in the hydraulic drive at constant velocity ($V_c$) of the load holder;
- predict the static pressure ($P_0$) in hydraulic drive on basis of the determined dynamic pressure ($P_{cdyn}$) and the determined constant velocity ($V_c$) and;
- determine the weight ($M_{load}$) of the load on basis of the predicted static pressure ($P_0$).

The inventor has realized that there is a relationship between the static pressure $P_0$ and the dynamic pressure $P_{cdyn}$ at constant velocity of the load holder. The inventor has further realized that this relationship may be used to predict the static pressure at dynamic pressure conditions in the hydraulic drive of the lift-truck. This insight makes possible to determine the weight of the load on the load holder of the lift truck with high accuracy during dynamic pressure conditions in the hydraulic drive. This, in turn, saves time and omits manipulation of auxiliary components such the lowering valve. Overall a fast, reliable and accurate weight determination is achieved.

Preferably, the static pressure $P_0$ is determined from a group of predetermined values of static pressures $P_0$ which each are associated with a value of constant velocity $V_c$ and value of constant dynamic pressure $P_{cdyn}$ determined at lifting a load with a lift truck. Since the relationship between static pressure $P_0$ and dynamic pressure $P_{cdyn}$ is non-linear this provides a simple yet reliable method of predicting the static pressure $P_0$. The group of predetermined values may be extrapolated or expanded over time which increases the reliability of the prediction.

Advantageously, the weight ($M_{load}$) of the load is calculated by:

$$M_{load} = ((P_0 * A_{cyl} * n_{cyl}) / (g * U)) - M_{mast}$$

Where: $A_{cyl}$ = the area of the hydraulic cylinder; U = speed ratio; $n_{cyl}$ = number of hydraulic cylinders in the hydraulic drive; $M_{mast}$ = the total weight of mast components acting on the hydraulic cylinder and g = the constant of gravity.

A controller configured to perform this calculation may determine the weight $M_{load}$ of the load on the load holder of a lift-truck having any arbitrary mast and hydraulic configuration. Thus, making the method versatile and easy to implement in various lift-trucks.

## Brief description of the drawings

Figure 1:    A schematic drawing of a lift-truck according to the present disclosure.
Figure 2:    A schematic drawing of a detail of a lift-truck according to the present disclosure.
Figure 3:    An explanatory diagram showing the pressure variation during lifting a load with a lift-truck according to the present disclosure.
Figure 4:    An explanatory table showing dynamic and static pressures at different loads and lifting velocities.

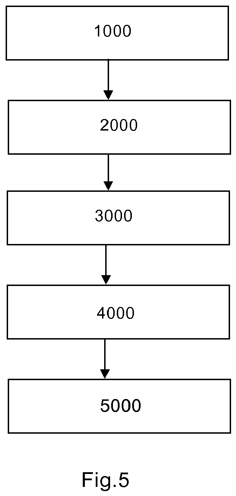

Figure 5:    A flowchart showing the steps of the method according to the present disclosure.

## Detailed description of embodiments

The lift-truck according to the present disclosure will now be described more fully hereinafter. The lift-truck according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description.

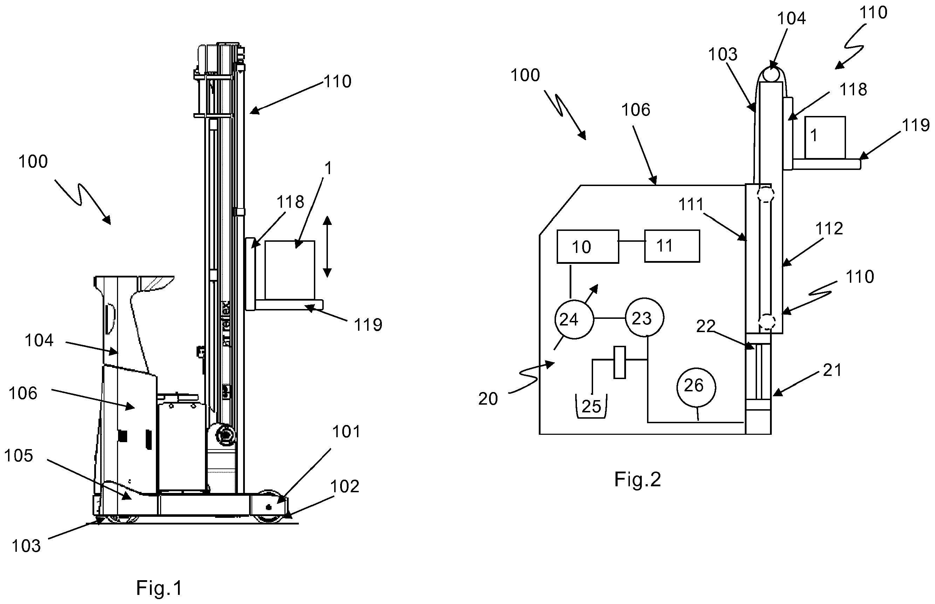

Figure 1 shows schematically a lift-truck 100 according to the present disclosure in side view. The lift-truck of figure 1 is a reach lift-truck. However, other lift-trucks are also contemplated with the scope of the present disclosure, for example stacker lift-trucks and order picker lift-trucks.

The lift-truck 100 comprises a mainframe 105 which in its forward portion extends into two forward support legs 101 carrying support wheels 102. A drive wheel 103 is arranged in the rear of the mainframe 105. In figure 1 only one of the support legs and the support wheels are shown. The mainframe 105 supports a chassis 106 in which a drive motor for propelling the drive wheel and a hydraulic drive for providing hydraulic power to movable parts on the lift-truck is accommodated (the motor and the hydraulic drive are not shown in figure 1). The chassis 106 further comprises a driver's compartment 104, comprising a seat and controls for driving and controlling the lift-truck (not shown in figure 1). The lift-truck 100 further comprises a lifting mast 110 and a load holder 119 that is movable in vertical direction upwards or downwards along the lifting mast. The load holder 119 may be arranged on a load carriage 118. In figure 1, the lifting mast 100 is extendable and may comprise two or more mast segments. The load carriage 118, may thereby be arranged movable in the inner mast segment. Different load holders 119 may be arranged on the load carriage 118, for example a lifting fork or clamping means such as gripping arms that are arranged movable towards each other for gripping and holding a load. In the lift-truck of figure 1, the load holder 119 is a lifting fork. A load 1 is supported on the load holder 119. Movement of the load carriage 118 and the load holder 119 and any mast segments is performed by hydraulic lifting cylinders and lifting chains (not shown in figure 1).

Figure 2 shows a schematic detailed view of the lift-truck of figure 1. Thus, lift-truck 100 comprises a a controller 10 with a memory 11 for controlling operation of the lift-truck. Such operations or functions includes, but are not limited to, propulsion of the lift-truck and functions relating to lifting and lowering of the load holder 119 and the mast segments of the lifting mast 110. The memory 11 of the lift-truck may be configured to carry instructions, such as computer executable instructions, for controlling the lift-truck. The controller 10 may be configured to read instructions from the memory 11 and execute these instructions to control the operation of the lift-truck. The controller 10 may be implemented using any suitable available processor or Programmable Logic Circuit (PLC). The controller 10 may be the Electronic Control Unit (ECU) of the lift-truck. The memory 11 may be implemented using any available technology for computer-readable memories such as ROM, RAM, SRAM, DRAM, FLASH, DDR, SDRAM or other memory technology.

Figure 2 further shows schematically the chassis 106 and a lifting mast 110 with a first mast segment 111 which is fixed to the lift-truck and a second mast segment 112 which is movable relative the first mast segment 111 in vertical direction. A load carriage 118 is movable along the second mast segment 112 and coupled to the first mast segment 111 by a lift chain 103 over a pulley 104 on the top of the second mast segment 112. The lift-truck comprises a hydraulic drive 20 with one or more hydraulic cylinders 21 which is/are arranged to move the load holder 119 in vertical direction. The hydraulic drive may also be denominated "hydraulic drive arrangement". The hydraulic cylinder/s 21 may respectively have a piston 22 which acts on the lift chain 103 and/or the mast segments of the lift-truck. The lift-truck 100 may be configured to perform a "free-lift" in which the load carrier 118 is moved along a mast segment. The lift truck may further be configured to perform a "main-lift" in which one or more a mast segments of an extendable mast are lifted. In figure, the load carrier 118 has been moved by a hydraulic cylinder (not shown) in a "free-lift" on the second mast segment 112 and the second mast segment 112 has been moved by hydraulic cylinder 21 in a "main-lift" relative the first mast segment 111. Mast configurations for lift-trucks as well as arrangements of lift-chains and hydraulic cylinders for moving load holders and mast segments are known in the art and need not be described further. Thus, where herein is referred to "hydraulic cylinder" this includes both one hydraulic cylinder or more than one hydraulic cylinder.

The hydraulic drive 20 further comprises a pump 23 for supplying hydraulic fluid to the hydraulic cylinder 21 and a motor 24 which arranged to drive the pump. The hydraulic drive may further comprise a drain 25 for receiving hydraulic fluid from the cylinder and a pressure sensor 26 arranged to measure the pressure in the hydraulic drive. The hydraulic drive further comprises necessary valves and hydraulic lines as known in the art (not shown).

The controller 10 is communicable connected, for example wireless or by electrical wiring, to one or more or all of the components of the hydraulic drive 20, e.g. the motor 24, the pump 23 and the pressure sensor 26. The controller 10 may thereby receive signals from the motor 24 indicative of motor operation parameters, such as motor speed or current. The controller 10 may further receive signals from the pump 23 indicative of pump characteristics. The controller 10 may further receive signals from the pressure sensor 26 indicative of the pressure in the hydraulic drive. The controller 10 is further connected to the driver's controls of the lift-truck such that the controller 10 may determine when the load holder 119 is operated in vertical direction. That is, when the load holder 119 is raised or lowered.

According to the present disclosure, the controller 10 is configured to determine the weight $M_{load}$ of the load 1 on the load holder 119 of the lift-truck.

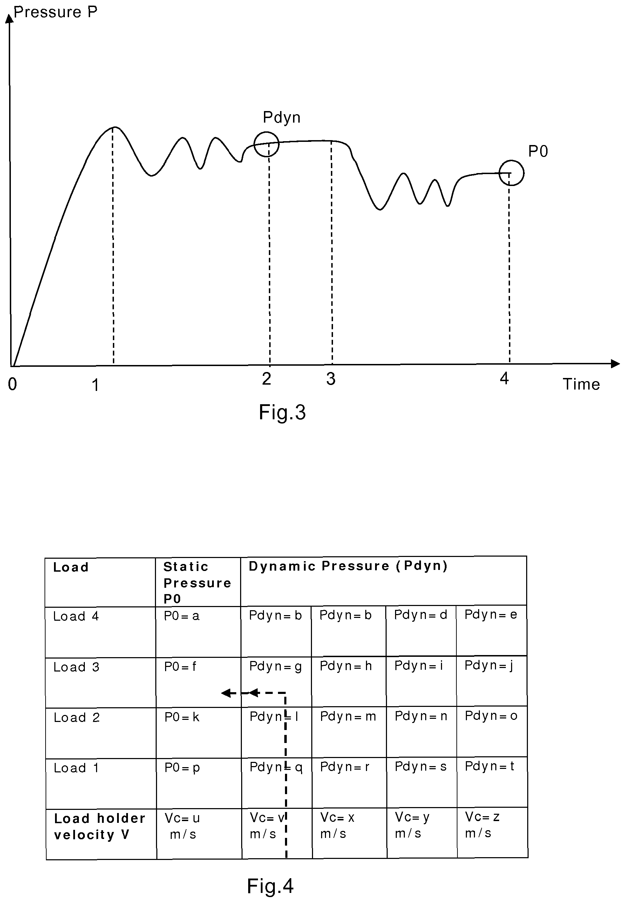

The underlying principle of the method for determining weight $M_{load}$ of a load 1 in a lifting operation of a lift-truck will in the following be discussed with reference to the diagram of figure 3.

Figure 3 shows a schematic diagram of the pressure P in the hydraulic drive 20 of the lift truck 100 during lifting of a load with an arbitrary weight. It is appreciated that the variation and magnitude of the pressure in figure 3 is only illustrated for explanatory purposes and may be different in reality.

In the diagram of figure 3, at time=0 the lifting operation commence. The motor 24 is activated and accelerates towards a target velocity. This causes the pump 23 to accelerate and the pressure P increases rapidly in the hydraulic drive. The pressure P during movement of the load holder 119 is a dynamic pressure $P_{dyn}$. Thus, it may vary due to dynamic forces acting in the hydraulic drive 20. At time = 1 the dynamic pressure P reaches its peak and a period of pressure fluctuations occurs until time = 2 where the velocity of the motor 24, and thus the load holder 119 is constant and the dynamic pressure $P_{dyn}$ stabilizes at an substantially constant level. At time = 3 the motor 24 is stopped. This causes a drop in the pressure P and further fluctuations of the pressure P occurs until it stabilizes at time = 4. At this point, essentially no dynamic forces acts in the hydraulic drive 20. The pressure P is therefore a static pressure, $P_0$.

Since no effects from the motor 24 or other dynamic forces acts on the pressure in the hydraulic drive 20, $P_0$ provides an accurate value for the pressure in the hydraulic drive that may be used for determining the weight $M_{load}$ of the load 1 on the load holder 119 . However, the time until static pressure is achieved is relatively long and therefor unpractical to await in transporting operations.

The inventor has realized that there is a relationship between the dynamic pressure $P_{dyn}$ at constant velocity of load holder and the static pressure $P_0$ that is achieved after the motor 24 is turned off. The relationship between the dynamic pressure $P_{dyn}$ and static pressure $P_0$ is non-linear.

According to the present disclosure this insight may be utilized to predicting the static pressure $P_0$ at a specific dynamic pressure $P_{dyn}$ that is determined at a specific constant velocity of the load holder 119 of the lift-truck. The predicted static pressure $P_0$ may then be used to determine e.g. by calculation the weight $M_{load}$ of the load 1 on the load holder 119 of the lift-truck.

Turning to figure 2. The controller 10 is thereby configured to determine the velocity (V) of the load holder 119 during a lifting operation. The velocity of the load holder 119 may be derived from the rotational speed of the motor 24. This parameter is constantly transmitted from the motor 24 to the controller 10.

The controller 10 is further configured to determine the dynamic pressure $P_{dyn}$ in the hydraulic drive 20 of the lift truck during a lifting operation. The controller 10 is thereby configured to receive a pressure signal from the pressure sensor 26 that is indicative of the pressure in the hydraulic drive 20. Alternatively or additionally, the controller 10 may be configured to receive or determine further parameters indicative of the dynamic pressure in the hydraulic drive 20. For example, the controller 10 may be configured to determine the pressure drop in the pump 23 on basis of the rotational speed of the motor 24 and characteristic data for the pump 23. The controller 10 may be configured to determine the pressure drop in the lines of the hydraulic drive 20 on basis of the magnitude of the flow of the hydraulic fluid. The flow may be determined from the displacement of the pump 23 and the dimensions and length of the lines of the hydraulic drive. These parameters may advantageously be used to refine the pressure readings from the pressure sensor 26 so that a very accurate value of the dynamic pressure $P_{dyn}$ is achieved. Alternatively these parameters may be used to determine the dynamic pressure $P_{dyn}$. The use of a pressure sensor 26 may thereby be omitted.

Typically, the controller 10 is configured to initiate determination of velocity V of the load holder 119 and the dynamic pressure $P_{dyn}$ in the hydraulic drive 20 in response to received initiation input. Initiation input may be a signal that indicates that a lifting operation is started. Initiation input may also be a signal from a designated weight initiation actuator (not shown) that is manually operated by the driver. For example a press-button in the drivers compartment 104 of the lift-truck 100.

The controller 10 is further configured to constantly or intermittently determine the dynamic pressure $P_{dyn}$ in the hydraulic drive 20 and the velocity V of the load holder 119.

The controller 10 may thereby be configured to determine a state in which the velocity V of the load holder 119 is constant. For example by comparing readings of motor speed. In the following this velocity is denominated constant velocity $V_c$. It is appreciated that the constant velocity $V_c$ is greater than 0 m/s.

The controller 20 is configured to predict the static pressure $P_0$ in the hydraulic drive on basis of the dynamic pressure $P_{dyn}$ in the hydraulic drive when a state of constant velocity $V_c$ of the load holder 119 is reached. This dynamic pressure is in the following denominated constant dynamic pressure $P_{cdyn}$.

As described above, there is a non-linear relationship between $P_{cdyn}$ and $P_0$. The static pressure $P_0$ may therefore be determined from a group of predetermined values of static pressures $P_0$ which each are associated with a value of constant velocity $V_c$ and value of constant dynamic pressure $P_{cdyn}$ determined at lifting a load 1 with a lift truck. Thus, the group comprises a plurality of values of static pressure $P_0$, of constant velocity $V_c$ and of dynamic pressure $P_{cdyn}$.

The values for $P_0$, $P_{cdyn}$ and Vc may be predetermined by performing a plurality of lifting operations with loads of different weight. For each lifting operation the static pressure $P_0$, the constant dynamic pressure $P_{cdyn}$ and the constant velocity $V_c$ are determined by measurements and stored in the memory 11. The values of associated with each other so that ach value of static pressure $P_0$ there is a specific value of $V_c$ and dynamic pressure $P_{cdyn}$. The group of values for $P_0$, $P_{cdyn}$ and $V_c$ may be referred to as a "look-up" table.

The controller 10 may thereby be configured to compare the determined constant velocity $V_c$ and the constant dynamic pressure $P_{cdyn}$ with the stored predetermined values of values group of constant dynamic pressure $P_{cdyn}$ and constant velocity $V_c$ and find the associated value of static pressure $P_0$.

Figure 4 shows an example of a group of predetermined values of static pressures $P_0$ which constant velocities $V_c$ and constant dynamic pressures $P_{cdyn}$ that has been determined for different loads 1 - 4. In figure 4, the letters "a", "b", "c" etc. indicate different values for static pressure $P_0$, dynamic pressure $P_{dync}$ and the velocity of the load holder $V_c$.

Figure 4 shows an example in which the constant velocity of the load holder $V_c$ is "v" m/s and the constant dynamic pressure $P_{cdyn}$ is "g" bar. As indicated by the dashed arrow, the static pressure $P_0$ is then "f" bar.

It is appreciated that prediction of the static pressure $P_0$ may be achieved by extrapolation of the group of predetermined values of $P_0$, $P_{cdyn}$ and $V_c$. It is further appreciated that the group of predetermined values may be expanded over time by adding further values of constant static pressure, constant velocities and static pressures.

The controller 10 is configured to determine the weight of the load on basis of the predicted value of the static pressure $P_0$.

Typically, at static pressure conditions, the pressure is equal to the force of the load divided by the cross-sectional area of the hydraulic cylinder/s supporting the load according to equation (1).

$$P = F/A_{cyl} \qquad (1)$$

Equation (1) may be applied on the weights acting on the total cross-sectional area of hydraulic cylinders of a lift-truck.

$$P_0 = (M_{load} + M_{mast})g/A_{cyl} \qquad (2)$$

Where:

g is the constant of gravity (9.81 m/s$^2$)

$M_{load}$ is the weight of the load on the load holder.

$M_{mast}$ is the weight of mast components that are acting on the hydraulic cylinder.

Such components include the load holder 119, the load carriage 118, movable mast segments and lifting chains 103 and pulleys 104.

From equation (2) the weight of the load on the load holder may be derived as:

$$M_{load} = ((P_0 * A_{cyl})/g) - M_{mast} \qquad (3)$$

As mentioned above, lift-trucks may have various mast configurations in terms of mast components which adds weight $M_{mast}$ on the hydraulic cylinders. In addition lift trucks, may have various design of the hydraulic drive that actuates the mast segments and lifting chains. For example, the hydraulic drives of different lift-trucks may comprise different number of hydraulic cylinders that are supporting the weight of the load and the mast components. Moreover, the configuration of lifting chains and pulleys may cause different speed ratio during movement of the load holder on the mast. In extendable mast speed ratio may further vary between different stages in the lifting operation. Thus, there may be one speed ratio, such as 1, during the free-lift and another speed ratio, such as 2, during the main-lift. A speed ratio of 2 may mean that two times the weight of a load acts on the hydraulic cylinders.

These factors, i.e. the number of cylinders and speed ratio, need to be considered in the determination of the weight of the load on the load holder:

$$M_{load} = ((P_0 * A_{cyl} * n_{cyl}) / (g * U)) - M_{mast} \qquad (4)$$

Where:

 U = speed ratio.
 $n_{cyl}$ = number of hydraulic cylinders in the hydraulic drive

Thus, the controller 10 may be configured to determine the weight $M_{load}$ of the load 1 on the load holder 119 on basis of equation 4. The number of cylinders $n_{cyl}$, the cross-sectional area $A_{cyl}$ of the cylinders, the speed-ratio U and the weight of mast components $M_{mast}$ for the lift-truck in question may be stored in the memory 11 and retrieved as values by the controller 10.

The determination of the weight $M_{load}$ of the load may be made in a lifting operation where the load holder 119, and the load 1 thereon is raised in a free-lift on the mast segment. Alternatively the weight $M_{load}$ of the load 1 may be determined during a main-lift. The determination of the weight of the load may also be made in a lowering operation, in which the load is lowered from a shelf in a storage.

The present disclosure also relates to a method for determine the weight $M_{load}$ of a load 1 on the load holder of a lift truck in a lifting operation. The general steps of the method may be followed in the flow chart of figure 4. Thus according to the method;

In a first step (1000) the hydraulic drive is operated to move the load holder 119;

In a second step (2000) the velocity (V) of the load holder 119 is determined;

In a third step (3000) the dynamic pressure ($P_{dyn}$) in the hydraulic drive 20 is determined at constant velocity ($V_c$) of the load holder 119;

In a fourth step (4000) the static pressure (Po) in hydraulic drive 20 is predicted on basis of the determined dynamic pressure ($P_{dyn}$) and the determined constant velocity ($V_c$) and;

In a fifth step (5000) the weight $M_{load}$ of the load 1 is determined on basis of the static pressure ($P_0$).

Although a particular embodiment has been disclosed in detail this has been done for purpose of illustration only, and is not intended to be limiting. In particular it is contemplated that various substitutions, alterations and modifications may be made within the scope of the appended claims.

For example, in an alternative, the weight of the load 1 on the load holder may be determined directly from the predetermined values of the static pressure $P_0$, the constant dynamic pressure $P_{cdyn}$ and the constant velocity $V_c$ that are stored in the memory. This may be case when a large number of values of $P_0$, $P_{cdyn}$ and $V_c$ have been determined for a large number of weights for a lift-truck of known configuration.

## Claims

1.  A lift-truck (100) comprising a load holder (119) arranged movable upwards/downwards in vertical direction and a hydraulic drive (20) comprising at least one hydraulic cylinder (21) arranged to move the load holder (119) and a controller (10) configured to control operation of the lift-truck; wherein the controller (100) is configured to:

- determine the velocity (V) of the load holder (119) during vertical movement of the load holder; and **characterized in that** the controller is further configured to:

- determine the dynamic pressure ($P_{cdyn}$) in the hydraulic drive (20) at constant velocity ($V_c$) of the load holder (119);
- predict the static pressure ($P_0$) in hydraulic drive (20) on basis of the determined dynamic pressure ($P_{cdyn}$) and the determined constant velocity ($V_c$) and;
- determine the weight ($M_{load}$) of the load (1) on basis of the predicted static pressure ($P_0$).

2. The lift-truck (100) according to claim 1, wherein the static pressure ($P_0$) is determined from a group of predetermined values of static pressures ($P_0$) which each are associated with a value of constant velocity ($V_c$) and value of constant dynamic pressure ($P_{cdyn}$) determined at lifting a load (1) with a lift truck.

3. The lift-truck (100) according to anyone of claims 1 or 2, wherein the weight ($M_{load}$) of the load (100) is calculated by:

$$M_{load} = ((P_0 * A_{cyl} * n_{cyl}) / (g*U)) - M_{mast}$$

where:

$A_{cyl}$ = the area of the hydraulic cylinder;
U = speed ratio;
$n_{cyl}$ = number of hydraulic cylinders in the hydraulic drive $M_{mast}$ = the total weight of mast components acting on the hydraulic cylinder g = the constant of gravity.

4. The lift-truck (100) according to claim 3, wherein $A_{cyl}$, U, $n_{cyl}$, $M_{mast}$ respectively are determined from a group of predetermined values for the lift-truck (100) in question.

5. The lift-truck (100) according to anyone of claims 1 - 4, wherein the hydraulic drive (20) comprises a motor (24) and wherein the velocity (V) of the load holder (119) is determined from the speed of the motor (24).

6. The lift-truck (100) according to anyone of claims 1 - 5, wherein the hydraulic drive (20) comprises a pressure sensor (26) which is arranged to measure the dynamic pressure ($P_{dyn}$) in the hydraulic drive (20) during vertical movement of the load holder (119).

7. The lift-truck (100) according to anyone of claims 1 - 6, wherein the the controller (10) is configured to initiate a weight determination cycle for determination of the weight ($M_{load}$) of the load (1) on the load holder (119) in response to received initiation input.

8. The lift-truck (100) according to claim 7, wherein initiation input is a signal that indicates that a lifting operation is started or a signal from a weight initiation actuator that is manually operated by the driver of the lift-truck.

9. A method for determining the weight ($M_{load}$) of a load (1) that is lifted by a lift-truck (100), said lift-truck (100) comprising:

a load holder (119) arranged movable upwards/downwards in vertical direction and a hydraulic drive (20) comprising at least one hydraulic cylinder (21) arranged to move the load holder (119) comprising the steps:

- operate (1000) the hydraulic drive to move the load holder (119);
- determine (2000) the velocity (V) of the load holder (119); **characterized in that**,

it further comprises the steps:

- determine (3000) the dynamic pressure ($P_{cdyn}$) in the hydraulic drive (20 at constant velocity ($V_c$) of the load holder (119);
- predict (4000) the static pressure ($P_0$) in hydraulic drive (20) on basis of the determined dynamic pressure

($P_{cdyn}$) and the determined constant velocity ($V_c$) and;
- determine (5000) the weight ($M_{load}$) of the load (1) on basis of the static pressure ($P_0$).

**Patentansprüche**

1. Flurförderzeug (100) mit einem Lasthalter (119), der beweglich angeordnet ist nach oben/unten in vertikaler Richtung, und mit einem hydraulischen Antrieb (20), der mindestens einen Hydraulikzylinder (21) umfasst, der so angeordnet ist, dass er den Lasthalter (119) bewegt, und eine Steuerung (10) zur Steuerung des Betriebs des Flurförderzeugs; wobei die Steuerung (100) ausgelegt ist, um:

   - die Geschwindigkeit (V) des Lasthalters (119) während der Vertikalbewegung des Lasthalters zu bestimmen, **dadurch gekennzeichnet, dass** die Steuerung ferner konfiguriert ist, um
   - den dynamischen Druck ($P_{cdyn}$) in dem hydraulischen Antrieb (20) bei konstanter Geschwindigkeit ($V_c$) des Lasthalters (119) zu bestimmen;
   - den statischen Druck ($P_0$) in dem hydraulischen Antrieb (20) auf der Grundlage des ermittelten dynamischen Drucks ($P_{cdyn}$) und der ermittelten konstanten Geschwindigkeit ($V_c$) vorherzusagen, und;
   - das Gewicht ($M_{load}$) der Last (1) auf der Grundlage des vorhergesagten statischen Drucks ($P_0$) zu bestimmen.

2. Flurförderzeug (100) nach Anspruch 1, wobei der statische Druck ($P_0$) aus einer Gruppe von vorbestimmten Werten statischer Drücke ($P_0$) bestimmt wird, die jeweils verbunden sind mit einem Wert der konstanten Geschwindigkeit ($V_c$) und einem Wert des konstanten dynamischen Drucks ($P_{cdyn}$), der beim Anheben einer Last (1) mit einem Flurförderzeug bestimmt wird.

3. Flurförderzeug (100) nach einem der Ansprüche 1 oder 2, wobei das Gewicht ($M_{load}$) der Last (100) berechnet wird durch:

$$M_{load} = ((P_0 {*} A_{cyl} {*} n_{cyl}) \,/\, (g {*} U)\,) - M_{mast}$$

   wobei:

   $A_{cyl}$ = die Fläche des Hydraulikzylinders;
   U = Geschwindigkeitsverhältnis;
   $n_{cyl}$ = Anzahl der Hydraulikzylinder in dem hydraulischen Antrieb;
   $M_{mast}$ = das Gesamtgewicht der auf den Hydraulikzylinder wirkenden Mastkomponenten;
   g = die Konstante der Schwerkraft.

4. Flurförderzeug (100) nach Anspruch 3, wobei $A_{cyl}$, U, $n_{cyl}$, $M_{mast}$ jeweils aus einer Gruppe vorgegebener Werte für das betreffende Flurförderzeug (100) ermittelt wurden.

5. Flurförderzeug (100) nach einem der Ansprüche 1-4, wobei der hydraulische Antrieb (20) des Flurförderzeugs (100) einen Motor (24) aufweist und wobei die Geschwindigkeit (V) des Lasthalters (119) aus der Drehzahl des Motors (24) bestimmt wird.

6. Flurförderzeug (100) nach einem der Ansprüche 1-5, wobei der hydraulische Antrieb (20) einen Drucksensor (26) umfasst, der so angeordnet ist, dass er den dynamischen Druck (Pcdyn) in dem hydraulischen Antrieb (20) während der vertikalen Bewegung des Lasthalters (119) misst.

7. Flurförderzeug (100) nach einem der Ansprüche 1-6, wobei die Steuerung (10) ausgelegt ist, um einen Gewichtsbestimmungszyklus zur Bestimmung des Gewichts ($M_{load}$) der Last (1) auf dem Lasthalter (119) als Antwort auf eine erhaltene Initiierungs-Eingabe zu initiieren.

8. Flurförderzeug (100) nach Anspruch 7, wobei die Initiierungs-Eingabe ein Signal ist, das anzeigt, dass ein Hebevorgang gestartet wurde, oder ein Signal von einem Gewichtsinitiierungsaktuator, der von dem Fahrer des Flurförderzeugs manuell bedient wird.

9. Verfahren zur Bestimmung des Gewichts ($M_{load}$) einer Last (1), die mit einem Flurförderzeug (100) angehoben wird, wobei dieses Flurförderzeug (100) umfasst:

   einen Lasthalter (119), der in vertikaler Richtung aufwärts/abwärts beweglich angeordnet ist, und einen Hydraulikantrieb (20) mit mindestens einem Hydraulikzylinder (21), der angeordnet ist, um den Lasthalter (119) zu bewegen, mit den Schritten:

   - Betätigen (1000) des hydraulischen Antriebs zum Bewegen des Lasthalters (119);
   - Bestimmen (2000) der Geschwindigkeit (V) des Lasthalters (119);

   **dadurch gekennzeichnet, dass** es die weiteren Schritte umfasst:

   - Bestimmen (3000) des dynamischen Drucks ($P_{cdyn}$) in dem hydraulischen Antrieb (20) bei konstanter Geschwindigkeit ($V_c$) des Lasthalters (119);
   - Vorhersagen (4000) des statischen Drucks ($P_0$) in dem hydraulischen Antrieb (20) auf der Grundlage des ermittelten dynamischen Drucks ($P_{cdyn}$) und der ermittelten konstanten Geschwindigkeit ($V_c$) und;
   - Bestimmen (5000) des Gewichts ($M_{load}$) der Last (1) auf der Grundlage des statischen Drucks ($P_0$).

## Revendications

1. Chariot élévateur (100) comprenant un porte-charge (119) agencé mobile vers le haut/vers le bas dans une direction verticale et un entraînement hydraulique (20) comprenant au moins un vérin hydraulique (21) agencé pour bouger le porte-charge (119) et un dispositif de commande (10) configuré pour commander un fonctionnement du chariot élévateur ; dans lequel le dispositif de commande (100) est configuré pour :

   - déterminer la vitesse (V) du porte-charge (119) durant un mouvement vertical du porte-charge ; et **caractérisé en ce que** le dispositif de commande est en outre configuré pour :
   - déterminer la pression dynamique ($P_{cdyn}$) dans l'entraînement hydraulique (20) à une vitesse constante ($V_c$) du porte-charge (119) ;
   - prédire la pression statique ($P_0$) dans un entraînement hydraulique (20) sur la base de la pression dynamique ($P_{cdyn}$) déterminée et de la vitesse constante ($V_c$) déterminée ; et
   - déterminer le poids ($M_{load}$) de la charge (1) sur la base de la pression statique ($P_0$) prédite.

2. Chariot élévateur (100) selon la revendication 1, dans lequel la pression statique ($P_0$) est déterminée à partir d'un groupe de valeurs prédéterminées de pressions statiques ($P_0$) qui sont chacune associées à une valeur de vitesse constante ($V_c$) et une valeur de pression dynamique constante ($P_{cdyn}$) déterminées au levage d'une charge (1) avec un chariot élévateur.

3. Chariot élévateur (100) selon l'une quelconque des revendications 1 ou 2, dans lequel le poids ($M_{load}$) de la charge (100) est calculé par :

$$M_{load} = ((P_0 * A_{cyl} * n_{cyl})/(g * U)) - M_{mast}$$

où :

   $A_{cyl}$ = la superficie du vérin hydraulique ;
   U = rapport de transmission ;
   $n_{cyl}$ = nombre de vérins hydrauliques dans l'entraînement hydraulique
   $M_{mast}$ = le poids total d'éléments de mât agissant sur le vérin hydraulique
   g = la constante de gravitation.

4. Chariot élévateur (100) selon la revendication 3, dans lequel $A_{cyl}$, U, $n_{cyl}$, $M_{mast}$ sont respectivement déterminés à partir d'un groupe de valeurs prédéterminées pour le chariot élévateur (100) en question.

5. Chariot élévateur (100) selon l'une quelconque des revendications 1-4, dans lequel l'entraînement hydraulique (20) comprend un moteur (24) et dans lequel la vitesse (V) du porte-charge (119) est déterminée à partir de la vitesse du moteur (24).

6. Chariot élévateur (100) selon l'une quelconque des revendications 1-5, dans lequel l'entraînement hydraulique (20) comprend un capteur de pression (26) qui est agencé pour mesurer la pression dynamique ($P_{dyn}$) dans l'entraînement hydraulique (20) durant un mouvement vertical du porte-charge (119).

7. Chariot élévateur (100) selon l'une quelconque des revendications 1-6, dans lequel le dispositif de commande (10) est configuré pour commencer un cycle de détermination de poids pour une détermination du poids ($M_{load}$) de la charge (1) sur le porte-charge (119) en réponse à une entrée d'initiation reçue.

8. Chariot élévateur (100) selon la revendication 7, dans lequel une entrée d'initiation est un signal qui indique qu'une opération de levage est déclenchée ou un signal en provenance d'un actionneur d'initiation de poids qui est commandé manuellement par le conducteur du chariot élévateur.

9. Procédé permettant de déterminer le poids ($M_{load}$) d'une charge (1) qui est levée par un chariot élévateur (100), ledit chariot élévateur (100) comprenant :

   un porte-charge (119) agencé mobile vers le haut/vers le bas dans une direction verticale et un entraînement hydraulique (20) comprenant au moins un vérin hydraulique (21) agencé pour bouger le porte-charge (119), comprenant les étapes suivantes :

   - la commande (1000) de l'entraînement hydraulique pour bouger le porte-charge (119) ;
   - la détermination (2000) de la vitesse (V) du porte-charge (119) ; **caractérisé en ce qu'**il comprend en outre les étapes :
   - la détermination (3000) de la pression dynamique ($P_{cdyn}$) dans l'entraînement hydraulique (20) à une vitesse constante ($V_c$) du porte-charge (119) ;
   - la prédiction (4000) de la pression statique ($P_0$) dans un entraînement hydraulique (20) sur la base de la pression dynamique ($P_{cdyn}$) déterminée et de la vitesse constante ($V_c$) déterminée et ;
   - la détermination (5000) du poids ($M_{load}$) de la charge (1) sur la base de la pression statique ($P_0$).

Fig.1

Fig.2

EP 3 666 722 B1

Pressure P

Pdyn

P0

0    1         2    3              4    Time

Fig.3

| Load | Static Pressure P0 | Dynamic Pressure (Pdyn) | | | |
|---|---|---|---|---|---|
| Load 4 | P0 = a | Pdyn = b | Pdyn = b | Pdyn = d | Pdyn = e |
| Load 3 | P0 = f | Pdyn = g | Pdyn = h | Pdyn = i | Pdyn = j |
| Load 2 | P0 = k | Pdyn = l | Pdyn = m | Pdyn = n | Pdyn = o |
| Load 1 | P0 = p | Pdyn = q | Pdyn = r | Pdyn = s | Pdyn = t |
| Load holder velocity V | Vc = u m/s | Vc = v m/s | Vc = x m/s | Vc = y m/s | Vc = z m/s |

Fig.4

```
┌─────────────────────┐
│        1000         │
└─────────────────────┘
           │
           ▼
┌─────────────────────┐
│        2000         │
└─────────────────────┘
           │
           ▼
┌─────────────────────┐
│        3000         │
└─────────────────────┘
           │
           ▼
┌─────────────────────┐
│        4000         │
└─────────────────────┘
           │
           ▼
┌─────────────────────┐
│        5000         │
└─────────────────────┘
```

Fig.5

**EP 3 666 722 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017202434 A1